# EUROPÄISCHE PATENTSCHRIFT

(11) **EP 1 324 890 B1**
(45) Veröffentlichungstag und Bekanntmachung des Hinweises auf die Patenterteilung: **09.06.2004**
(21) Anmeldenummer: 02781264.3
(22) Anmeldetag: 17.10.2002
(51) Int. Cl.: B60D 1/62, B60D 1/64, H01R 13/631

(54) **STECKVERBINDUNGSEINRICHTUNG**
CONNECTION DEVICE
DISPOSITIF DE CONNEXION ENFICHABLE

(30) Priorität: 20.10.2001 DE 10151819
(43) Veröffentlichungstag der Anmeldung: 09.07.2003
(73) Patentinhaber: ERICH JAEGER GmbH & Co. KG, 61169 Friedberg (DE)
(72) Erfinder: MATTERN, Kirstin, 61209 Echzell (DE); RAUTENBERG, Kurt, 61267 Neu-Anspach (DE)
(74) Vertreter: KEIL & SCHAAFHAUSEN
(86) Internationale Anmeldenummer: PCT/EP2002/011639
(87) Internationale Veröffentlichungsnummer: WO 2003/035415

(56) Entgegenhaltungen:
- DE-A- 3 009 284
- DE-A- 4 135 795
- FR-A- 2 669 152
- GB-A- 2 128 038
- US-A- 4 111 452
- US-A- 5 458 357
- US-B1- 6 224 407

## Beschreibung

Die Erfindung bezieht sich auf eine Steckverbindungseinrichtung für den selbsttätigen z.B. mehrpoligen elektrischen Anschluss eines Fahrzeuganhängers, insbesondere eines Sattelaufliegers, an ein Zugfahrzeug, insbesondere an einen Sattelschlepper, mit einer Dose und einem Stecker, welche an dem Fahrzeuganhänger (z.B. der Stecker) bzw. dem Zugfahrzeug (z.B. die Dose) anordenbar, beim Ankoppeln des Fahrzeuganhängers an das Zugfahrzeug zueinander ausrichtbar und mittels eines z.B. als Kolben-Zylinder-Anordnung ausgebildeten Antriebes relativ zueinander zwischen einer vorgeschobenen Verbindungsstellung und einer zurückgezogenen Ruhestellung geführt verfahrbar sind, wobei vorzugsweise ein Deckel der Dose durch Verschieben des in ihr aufgenommenen, die Kontakthülsen tragenden Kontakteinsatzes in Richtung der Verbindungsstellung mit Hilfe des Antriebes selbsttätig öffenbar und beim Zurückziehen des Kontakteinsatzes in die Ruhestellung wieder verschließbar ist.

Bei einer derartigen bereits vorgeschlagenen Steckverbindungseinrichtung gemäß Oberbegriff des Anspruchs 1 soll die Kupplungsposition durch eine Sensoreinrichtung gewährleistet werden. Aufgrund der im Fahrzeugbau üblichen großen Toleranzen und aufgrund der Verschmutzungsgefahr von Sensoren im Fahrbetrieb ist die genaue Ausrichtung des Steckers zur Steckdose jedoch schwierig. Die Selbsttätigkeit des Verbindungsvorganges ist daher in Frage gestellt.

Aufgabe der vorliegenden Erfindung ist es, eine Steckverbindungseinrichtung der genannten Art vorzuschlagen, bei welcher ohne manuelle Betätigung eine große und selbsttätige Findungsfreundlichkeit der beiden Steckelemente zueinander gegeben ist.

Diese Aufgabe wird bei einer Steckverbindungseinrichtung der eingangs genannten Art dadurch gelöst, dass der Stecker gegen die Wirkung einer Haltefeder elastisch seitlich ausweichend gelagert ist.

Mit der erfindungsgemäßen Lösung wird gewährleistet, dass das selbsttätige Zusammenführen von Stecker und Dose auch bei größeren Toleranzen oder Ungenauigkeit der Sensierung leicht und sicher hergestellt werden kann.

Generell ist in diesem Zusammenhang zu erwähnen, dass die in dieser Beschreibung verwendeten Begriffe "Dose" und "Stecker" als die beiden Steckelemente einer Steckverbindungseinrichtung auch gegeneinander vertauscht werden können, d.h. dass diejenigen Merkmale, welche im vorliegenden Zusammenhang für eine Dose bzw. Stecker beschrieben und dargestellt werden, auch umgekehrt bei dem jeweils anderen der beiden Steckelemente vorgesehen sein können. Lediglich zur Vereinfachung der Beschreibung werden auch nachfolgend die Begriffe "Dose" und "Stecker" in diesem Sinne verwendet.

Damit der Stecker nach dem Lösen der Steckverbindung wieder in die richtige Ausgangsposition gelangt, wenn er aufgrund einer Ungenauigkeit der Zuführung der Steckdose seitlich ausgelenkt worden ist, ist die Haltefeder für den Stecker bei einer besonderen Ausgestaltung der Erfindung als das Steckergehäuse umgebende Federspirale ausgebildet, welche sich vorzugsweise nach vorne in ihrem Durchmesser verjüngt.

Die gestellte Aufgabe wird in Weiterbildung des Erfindungsgedankens noch besser gelöst, wenn das Steckergehäuse einen Einführungstrichter für die Dose aufweist, da mit Hilfe dessen die Dose auch bei toleranzbedingten Abweichungen der Ausrichtung sicher in den Stecker eingeführt werden kann.

Die seitliche Auslenkung des Steckers kann bspw. auf einfache Weise dadurch gewährleistet werden, dass das Steckergehäuse rückwärtig z.B. über eine Kugellagerung auf eine Halteplatte abgestützt ist.

Für einen weiteren Toleranzausgleich in Axialrichtung ist es von Vorteil, wenn gemäß einem weiteren Erfindungsmerkmal sich die an einem z.B. auch als Montageflansch dienenden Befestigungsflansch geführte Halteplatte für das Steckergehäuse auf eine Rückstellfeder abstützt. Auf diese Weise ist auch ein seitliches Verschwenken des Steckergehäuses gegen die Wirkung der Rückstellfeder sowie der Haltefeder für den Stecker sichergestellt.

Um eine Verschmutzung der Kontaktstifte des Steckers weitgehend zu verhindern, dennoch aber eine selbsttätige Herstellung der Steckverbindung zu gewährleisten, wird mit der Erfindung ferner vorgeschlagen, dass das den die Kontaktstifte tragende Kontaktaufsatz aufnehmende Steckergehäuse, z.B. hinter dem Einführungstrichter in Ruhestellung von einer Abdeckplatte verschlossen ist, welche vorzugsweise Durchtrittsöffnungen für die Kontaktstifte aufweist und gegen die Wirkung einer Rückstellfeder aus der vorderen Ruhestellung und der Freigabe der Kontaktstifte in eine rückwärtige Verbindungsstellung bewegbar, insbesondere verschiebbar ist. Auf diese Weise wird ein selbsttätiges Öffnen und Schließen des Steckergehäuses durch das Einführen und Wiederherausziehen der Dose selbst bewirkt. In Ruhestellung, also bei Nichtgebrauch, liegen die Kontaktstifte geschützt. Dabei ist die Anordnung vorzugsweise so getroffen, dass in Ruhestellung der Abdeckplatte die Kontaktstifte die Durchtrittsöffnungen gerade verschließen. Aufgrund dessen können die Kontaktstifte als Führung für die Abdeckplatte bei ihrer Hin- und Herbewegung dienen.

Zum Schutz des Innenraums des Steckergehäuses kann ferner vorgesehen sein, dass die Abdeckplatte in Ruhestellung von ihrer Rückstellfeder an ihrem äußeren Rand, ggf. unter der Zwischenlage eines Dichtungsrings, an eine Innenschulter des Steckergehäuses gedrückt wird.

Der Dichtungsring kann dabei an dem vorderen Ende einer Distanzhülse in dem Stecker bzw. dem Steckergehäuse gehalten sein.

Zur Erleichterung der Montage kann die Rückstellfeder für die Abdeckplatte ferner als Federspirale den Kontaktaufsatz geben und vorzugsweise mit ihrem rückwärtigen Ende in einer Ringnut aufgenommen sein.

Gemäß einem weiteren Erfindungsmerkmal kann das Steckergehäuse mit einem einen Ventilkern aufnehmenden Stopfen versehen werden, welcher im Einbauzustand nach unten weist. In dem Ventilkern ist eine Schikane vorgesehen, durch welche Kondenswasser abtropfen kann, jedoch das Eindringen von Wasser (Spritzwasser, Dampfstrahlen) von außen verhindert wird.

Um die Steckverbindung in Verbindungsstellung von Stecker und Dose sicherzustellen und in Ruhestellung die Dose zuverlässig zu halten wird, ist der Antrieb in der Verbindungsstellung und/oder der Ruhestellung der Dose verriegelbar.

Um die Montage und Demontage zu vereinfachen, kann der Kontakteinsatz an dem Kolben des als z.B. pneumatische Kolben-Zylinder-Anordnung ausgebildeten Antriebs lösbar befestigt sein, etwa mit einer Schraube.

Damit die Kontakthülsen die richtige Ausrichtung zu den Kontaktstiften des Steckers beibehalten, ist bei einer weiteren Ausgestaltung der Erfindung der Kontakteinsatz der Dose an einer z.B. auch als Montageplatte dienenden Grundplatte drehsicher geführt.

Die Grundplatte kann dabei mit einem den Kontakteinsatz umgreifenden Gehäuseabschnitt mit über dessen Umfang verteilte Kugelkörper ausgestattet sein. Hierdurch wird erreicht, dass der Kontakteinsatz in zwei definierten Stellungen (Ausgangsstellung = entriegelt; Funktionsstellung = verriegelt) gehalten wird.

Die erfindungsgemäße Steckverbindungseinrichtung kann wahlweise mit einer Notentriegelung, welche bei Stromausfall ein mechanisches Trennen von Dose und Stecker gestattet, eine Verdrehsicherung der Dose, einen Kodierschutz der Dose, Sensoren zur Positionserkennung der Dose, eine Sicherung des Steckergehäuses gegen Abheben von der Halteplatte und/oder Verrastungsmittel des Kontakteinsatzes in ein- und ausgefahrener Lage aufweisen, um die Funktionssicherheit noch zu erhöhen.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnungen.

Es zeigen:
- Fig. 1: in einer ersten Schrägansicht ein Ausführungsbeispiel einer erfindungsgemäßen Steckverbindungseinrichtung kurz vor dem Einführen der Dose in den Stecker,

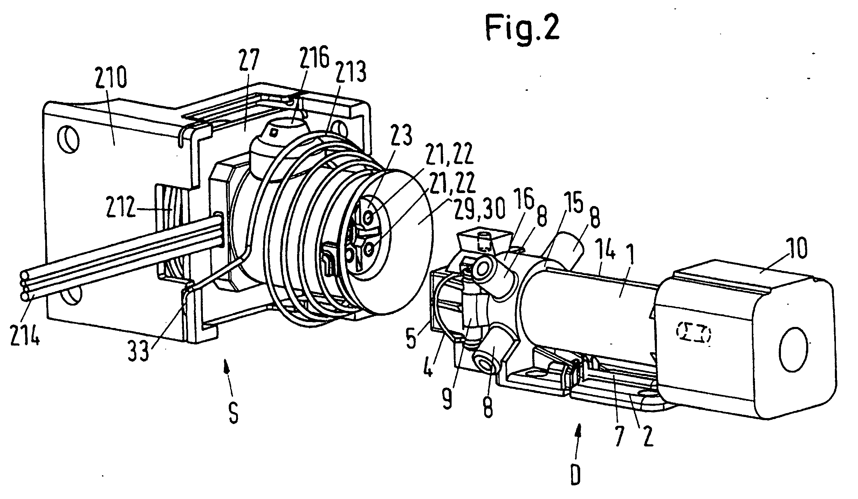

- Fig. 2: eine andere Schrägansicht der Steckverbindungseinrichtung gemäß Fig. 1,
- Fig. 3: im Längsschnitt eine erfindungsgemäße Dose,
- Fig. 3a: eine Seitenansicht des Vorderabschnittes der Dose gemäß Fig. 3,
- Fig. 4: im Längsschnitt einen zu der Dose gemäß Fig. 3 passenden erfindungsgemäßen Stecker, und
- Fig. 5: in Schrägansicht eine andere Ausführungsform einer erfindungsgemäßen Steckverbindungseinrichtung.

Die in den Figuren dargestellte Steckverbindungseinrichtung, welche bspw. bei einer Kombination Sattelauflieger/Sattelschlepper verwendet werden kann und dann im Bereich der Sattelkupplung anzuordnen ist, besteht aus einer z.B. an dem Fahrzeuganhänger anzubringenden Stecker und einer z.B. an dem Zugfahrzeug anzubringenden Dose D. Beim Ankoppeln des Fahrzeuganhängers an das Zugfahrzeug sind Stecker und Dose selbstständig zueinander auszurichten, was weitgehend mit Hilfe einer Sensoranordnung, welche die Position des Fahrzeuganhängers relativ zu dem Zugfahrzeug feststellt, erfolgt. Mittels eines als Kolben-Zylinder-Anordnung ausgebildeten Antriebs 10 werden die beiden Steckelemente D, S zusammengesteckt. Der Antrieb 10 ist so ausgebildet, dass er die Dose D von einer zurückgezogenen Ruhestellung, wenn die Steckverbindung nicht genutzt wird, in eine vorgeschobene Verbindungsstellung, wenn die Steckverbindung hergestellt werden soll, bringen kann, in welcher die Dose D mit dem Stecker S zusammenwirkt. Beim Lösen der Steckverbindung wird die Bewegungsrichtung der Dose D umgekehrt.

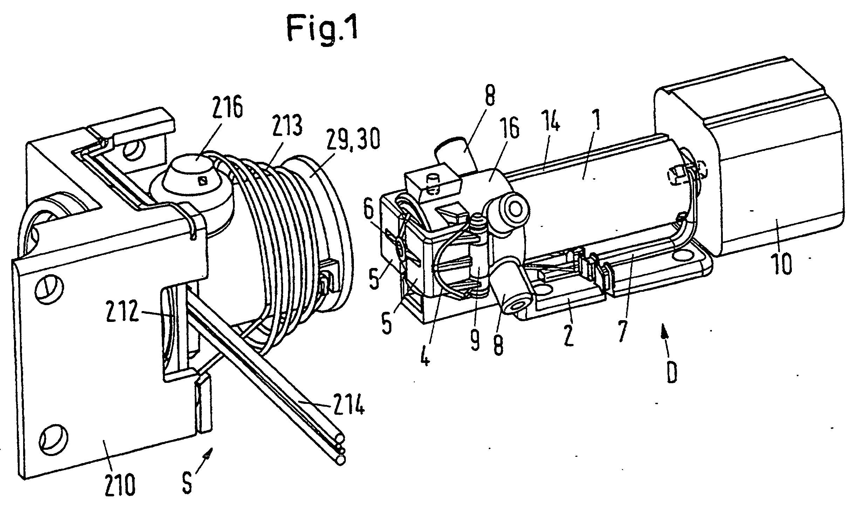

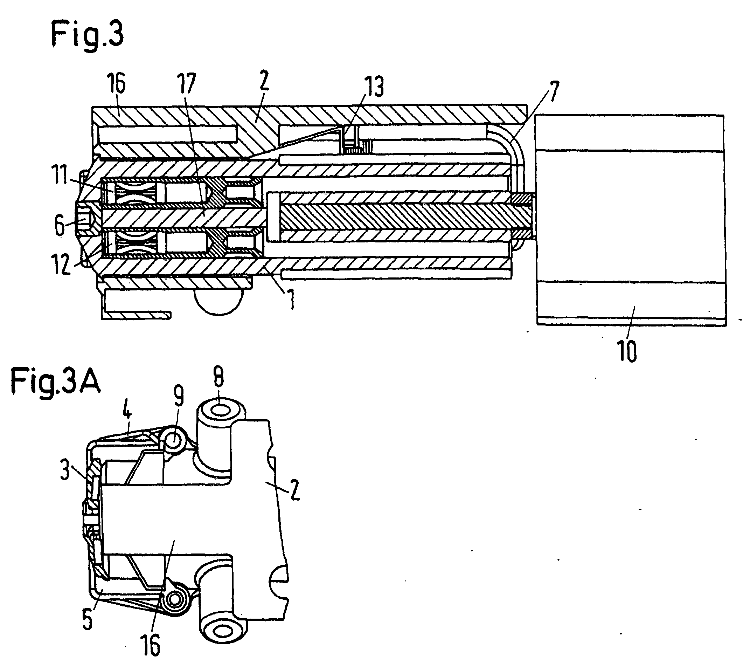

Die Dose D hat, wie am Besten aus Fig. 1 und Fig. 3a ersichtlich, einen aus zwei Klappen gebildeten Deckel 5. Die Klappen des Deckels 5 sind an Schwenkachsen 9 eines ringförmigen Gehäuseabschnitts 16 einer Grundplatte 2 gegen die Wirkung von als Schenkelfedern ausgebildeten Rückstellfedern 4 derart schwenkbar gelagert, dass beim Vorschieben des an der Grundplatte 2 geführten Kontakteinsatzes 1 in Verbindungsstellung die beiden Klappen des Deckels 5 nach außen wegschwenken und beim Zurückziehen des Kontakteinsatzes 1 in die zurückgezogene Ruhestellung mittels der Rückstellfedern 4 wieder in ihre Schließlage gebracht werden. Zur sicheren Abdichtung ist das vordere Ende des Kontakteinsatzes 1 bzw. des Gehäuseabschnitts 16 mit einer Dichtscheibe 3 versehen, an welche sich die Klappen des Deckels 5 in Schließstellung anlegen können. Eine verdrehsichere Führung des Kontakteinsatzes 1 erfolgt an dem Gehäuseabschnitt 16 mit Hilfe einer äußeren Längsnut 14 im Mantel des Kontakteinsatzes 1 und einer zugeordneten inneren Längsrippe 15 des Gehäuseabschnitts 16. Der Kontakteinsatz 1 ist mit Hilfe einer Imbusschraube 6 an dem vorderen Ende des Kolbens 17 der Kolben-Zylinder-Anordnung 10 lösbar befestigt. Ein Kabel 7 für die Versorgung des Kontakteinsatzes 1 ist in die Grundplatte 2 eingegossen und mittels einer Schelle 13 zugentlastet. Der Gehäuseabschnitt 16 der Grundplatte 2 trägt über seinen Außenumfang verteilt radial vorspringende Kugelkörper 8, welche dazu dienen, den Kontakteinsatz 1 in zwei definierten Stellungen (Ausgangsstellung = entriegelt; Funktionsstellung = verriegelt) zu halten.

Der Antrieb 10 ist sowohl in der vorgeschobenen Verbindungsstellung als auch in der zurückgezogenen Ruhestellung der Dose D verriegelt, um die Dose D in beiden Stellungen gegen Lageveränderung zu sichern.

Zum Toleranzausgleich der Orientierung der beiden Steckelemente zueinander ist der Stecker S gegen die Wirkung einer Haltefeder 213 elastisch seitlich ausweichend gelagert. Die Haltefeder 213 für den Stecker S ist als das Steckergehäuse 29 umgebende Federspirale ausgebildet, welche, als Doppelspiralfeder ausgebildet, mit ihren rückwärtigen freien Enden 33 an einem Befestigungsflansch 210 festgelegt ist, welcher auch als Montageflansch dienen kann. Die Haltefeder 213 verjüngt sich nach'vorne in ihrem Durchmesser, um ihr die erforderliche Rücksteilcharakteristik zu geben.

Das Steckergehäuse 29 ist an seinem vorderen Ende mit einem Einführungstrichter 30 für die Dose D ausgestattet, um Ausrichtungstoleranzen auszugleichen. Außerdem ist das Steckergehäuse 29 über eine Kugellagerung 26 auf einer Halteplatte 27 abgestützt, um ein seitliches Ausweichen gegen die Wirkung der Haltefeder 213 zu ermöglichen.

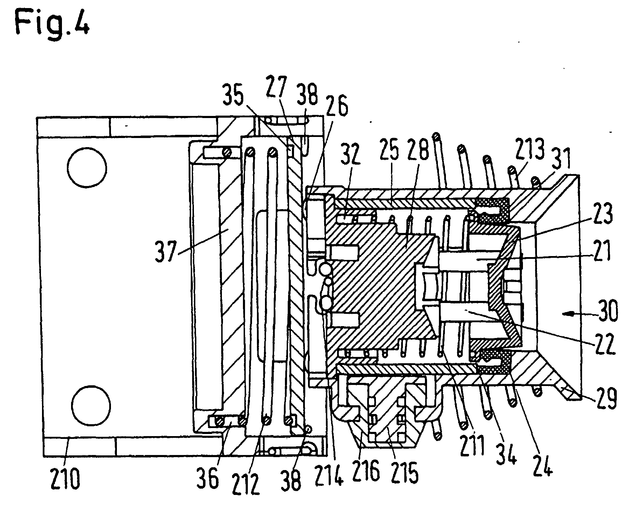

Das Steckergehäuse 29 nimmt ein Kontaktstift 21, 22 tragenden Kontaktaufsatz 28 auf. In der in Fig. 4 dargestellten Ruhestellung ist das Steckergehäuse 29 von einer Abdeckplatte 23 verschlossen, welche bspw. Durchtrittsöffnungen für die Kontaktstifte 21, 22 aufweist, welche in der Ruhestellung die Durchtrittsöffnungen gerade verschließen. Die Abdeckplatte 23 wird von einer Rückstellfeder 211 mit einem äußeren Kragen unter Zwischenlage eines als Simmerring ausgebildeten Dichtungsringes 24 an eine Innenschulter 31 des Steckergehäuses 29 gedrückt. Die Rückstellfeder 211 ist als Federspirale ausgebildet, welche auf dem Kontaktaufsatz 28 sitzt und mit ihrem hinteren Ende in einer Umfangsnut 32 des Kontaktaufsatzes 28 gehalten ist. Die Abdeckplatte 23 ist vorne konkav ausgebildet, und zwar in Anpassung an die konvexe Ausbildung des vorderen Endes der Dose D (vgl. Fig. 3), so dass eine zusätzliche Zentrierung zum Einführen der Dose D in den Stecker S stattfindet. Der Dichtungsring 24 ist an dem vorderen Ende einer Distanzhülse 25 in dem Steckergehäuse 29 gehalten. Das Kabel 214 für den Kontaktaufsatz 28 ist mit dem Kontaktaufsatz 28 und dem Steckergehäuse 29 vergossen.

Die Halteplatte 27, auf welcher sich das Steckergehäuse 29 mit dem Kontaktaufsatz 28 abstützt, ist in einem Befestigungsflansch 210, welcher auch als Montageflansch dienen kann, axial gegen die Wirkung einer Rückstellfeder 212 axial verschieblich gelagert. Der Stecker S kann daher beim Einstecken in die Dose D nach hinten elastisch ausweichen, um Stöße und/oder Toleranzen auszugleichen. Die Rückstellfeder 212 ist ebenfalls als Federspirale ausgebildet, welche an ihrem vorderen Ende in einer Ringnut 35 der Halteplatte 27 und an ihrem rückwärtigen Ende in einer Ringnut 36 einer feststehenden Querplatte 37 des Befestigungsflansches 210 aufgenommen ist. In Ruhestellung liegt die Halteplatte 27 vorne an Anschlägen 38 des Befestigungsflansches 210 unter dem Druck der Rückstellfeder 212 an.

Das Steckergehäuse 29 ist mit einem einen Ventilkern 215 aufnehmenden in Einbaulage nach unten weisenden Stopfen 216 ausgestattet, um durch eine im Ventilkern ausgebildete Schikane Kondenswasser abtropfen zu lassen, dabei jedoch das Eindringen von Wasser (Spritzwasser, Dampfstrahlen) von außen zu verhindern.

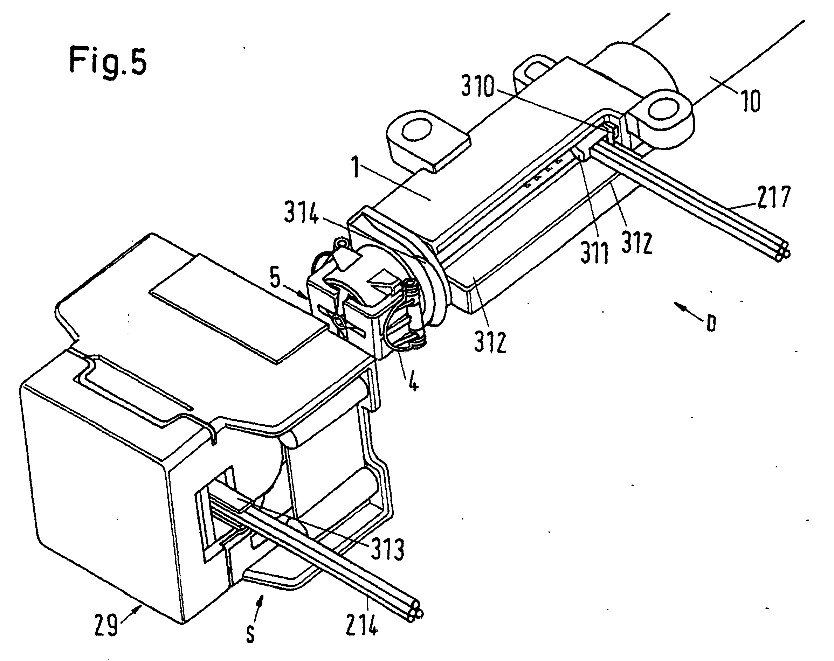

Bei der in Fig. 5 dargestellten Ausführungsform einer erfindungsgemäßen Steckverbindungseinrichtung aus Dose D und Stecker S sei auf folgende Besonderheiten hingewiesen: An dem Kontakteinsatz 1 ist eine Notentriegelung 310 angebracht, welche bei Ausfall des Systems sicherstellt, dass die Komponenten der Steckverbindungseinrichtung mechanisch voneinander getrennt werden können. Eine Kunststoffaufnahme für den Abgang des Kabels 217 dient gleichzeitig als Verdrehsicherung und Kodierschutz 311 der Dose D. In der Dose D sind ferner zwei Sensoren 312 eingebracht, welche die beiden Positionen der Dose D (eingefahren und ausgefahren) erkennen. An dem Steckergehäuse 29 sind seitlich abstehende Rippen angebracht, welche als Abhebesicherung 313, d.h. als mechanische Sicherung des Steckergehäuses 29 gegen Abheben von der Halteplatte dienen, während die Dose D aus dem Stecker S gezogen wird. Statt der Kugelverrastung 8 erfolgt die Verrastung der Dose D in eingefahrener und in ausgefahrener Lage mittels eines als Federbügel ausgebildeten Verrastungsmittels 313.

### Bezugszeichenliste

- 1: Kontakteinsatz
- 2: Grundplatte
- 3: Dichtscheibe für den Deckel 5
- 4: Rückstellfeder (Schenkelfedern) für den Deckel 5
- 5: Deckel
- 6: Imbusschraube
- 7: Kabel
- 8: Kugelkörper
- 9: Schwenkachsen des Deckels 5
- 10: Kolben-Zylinder-Anordnung (verdrehsicher)
- 11: Kontakthülse
- 12: Kontakthülse
- 13: Zugentlastungsschelle
- 14: Nut
- 15: Rippe
- 16: Gehäuseabschnitt
- 17: Kolben
- 21: Kontaktstift
- 22: Kontaktstift
- 23: Abdeckplatte
- 24: Dichtungsring
- 25: Distanzhülse
- 26: Kugellagerung
- 27: Halteplatte
- 28: Kontaktaufsatz
- 29: Steckergehäuse
- 30: Einführungstrichter
- 31: Innenschulter
- 32: Ringnut
- 33: Enden der Haltefeder 213
- 34: Kragen
- 35: Ringnut
- 36: Ringnut
- 37: Querplatte
- 38: Anschläge

- 210: Befestigungsflansch (Montageflansch)
- 211: Rückstellfeder für die Abdeckplatte 23
- 212: Rückstellfeder für die Halteplatte 27
- 213: Haltefeder (Federspirale)
- 214: Kabel
- 215: Ventilkern
- 216: Stopfen
- 217: Kabel
- 310: Notentriegelung
- 311: Verdrehsicherung/Kodierschutz
- 312: Sensoren
- 313: Abhebesicherung
- 314: Verrastungsmittel

- D: Dose
- S: Stecker

## Patentansprüche

1. Steckverbindungseinrichtung für den selbsttätigen, z. B. mehrpoligen, elektrischen Anschluss eines Fahrzeuganhängers, insbesondere eines Sattelaufliegers, an ein Zugfahrzeug, insbesondere an einen Sattelschlepper, mit einer Dose (D) und einem Stecker (S), welche an dem Fahrzeuganhänger, z. B. der Stecker(S), bzw. dem Zugfahrzeug, z. B. die Dose (D), anordenbar, beim Ankoppeln des Fahrzeuganhängers an das Zugfahrzeug zueinander ausrichtbar und mittels eines z. B. als Kolben-Zylinder-Anordnung ausgebildeten Antriebes (10) relativ zueinander zwischen einer vorgeschobenen Verbindungsstellung und einer zurückgezogenen Ruhestellung geführt verfahrbar sind, wobei entweder der Stecker (S) oder die Dose (D), vorzugsweise ein Deckel (5) der Dose (D), durch Verschieben des in ihr aufgenommenen, die Kontakthülsen (11, 12) tragenden Kontakteinsatzes (1) in Richtung der Verbindungsstellung mit Hilfe des Antriebes (10) öffenbar und beim Zurückziehen des Kontakteinsatzes (1) in die Ruhestellung wieder verschließbar ist, **dadurch gekennzeichnet, dass** der Stecker (S) gegen die Wirkung einer Haltefeder (213) elastisch seitlich ausweichend gelagert ist.

2. Einrichtung nach Anspruch 1, **dadurch gekennzeichnet, dass** die Haltefeder (213) für den Stecker (S) als das Steckergehäuse (29) umgebende Federspirale ausgebildet ist, welche sich vorzugsweise nach vorne in ihrem Durchmesser verjüngt.

3. Einrichtung nach Anspruch 1 oder 2, **dadurch gekennzeichnet, dass** das Steckergehäuse (29) einen Einführungstrichter (30) für die Dose (D) aufweist.

4. Einrichtung nach einem der Ansprüche 1 bis 3, **dadurch gekennzeichnet, dass** sich das Steckergehäuse (29) rückwärtig, z.B. über eine Kugellagerung (26), auf einer. Halteplatte (27) abstützt.

5. Einrichtung nach Anspruch 4, **dadurch gekennzeichnet, dass** sich die an einem z.B. auch als Montageflansch dienenden Befestigungsflansch (210) geführte Halteplatte (27) für das Steckergehäuse (29) auf einer Rückstellfeder (212) abstützt.

6. Einrichtung nach einem der Ansprüche 1 bis 5, **dadurch gekennzeichnet, dass** das den die Kontaktstifte (21, 22) tragende Kontaktaufsatz (28) aufnehmende Steckergehäuse (29), z.B. hinter dem Einführungstrichter (30) in Ruhestellung von einer Abdeckplatte (23) verschlossen ist, welche vorzugsweise Durchtrittsöffnungen für die Kontaktstifte (21, 22) aufweist und gegen die Wirkung einer Rückstellfeder (211) aus der vorderen Ruhestellung unter Freigabe der Kontaktstifte (21, 22) in eine rückwärtige Verbindungsstellung bewegbar ist.

7. Einrichtung nach einem der vorhergehenden Ansprüche, **dadurch gekennzeichnet, dass** die Abdeckplatte (23) in Ruhestellung von ihrer Rückstellfeder (211) an ihrem äußeren Rand, ggf. unter Zwischenlage eines Dichtungsrings (24), an eine Innenschulter (31) des Steckergehäuses (29) gedrückt wird.

8. Einrichtung nach einem der vorhergehenden Ansprüche, **dadurch gekennzeichnet, dass** der Dichtungsring (24) an dem vorderen Ende einer Distanzhülse (25) in dem Steckergehäuse (29) gehalten wird.

9. Einrichtung nach einem der Ansprüche 5 bis 8, **dadurch gekennzeichnet, dass** die Rückstellfeder (211) für die Abdeckplatte (23) als Federspirale den Kontaktaufsatz (28) umgibt.

10. Einrichtung nach einem der vorhergehenden Ansprüche, **dadurch gekennzeichnet, dass** das Steckergehäuse (29) einen Ventilkern (215) aufnehmenden Stopfen (216) aufweist, um Kondenswasser' abtropfen zu lassen, das Eindringen von Wasser von außen jedoch zu verhindern.

## Claims

1. Connection device for the automatic; e.g. multipolar elecrical connection of a vehicle trailer, in particular a semitrailer, to a tractive vehicle, in particular to a semitrailer truck, comprising a socket (D) and a plug (S), mountable to the vehicle trailer, e.g. the plug (S), and the tractive vehicle, respectively, e.g. the socket (D), being displaceable in relation to each other when coupling the vehicle trailer to the tractive vehicle and being movable relative to each other by means of a drive (10) provided as e.g. a piston-cylinder arrangement between an engaged connecting position and a disengaged resting position, either the plug (S) or the socket (D), preferably a cover (5) of the socket (D), can be opened by moving the contact insert (1) provided therein and comprising the contact sockets (11, 12) in the direction of the connecting position with the help of the drive (10) and which can be closed when withdrawing the contact insert (1) in the resting position, **characterized in that** the plug (S) is arranged so that it can elastically laterally evade against the effect of a retaining spring (213).

2. Device according to claim 1 or 2, **characterized in that** the retaining spring (2, 3) for the plug (S) is formed as a spring spiral surrounding the plug housing (29), forward-reducing in its diameter.

3. Device according to claim. 1 or 2, **characterized in that** the plug housing (29) comprises a feeding funnel (30) for the socket (D).

4. Device according to one of the claims 1 to 3, **characterized in that** the plug housing (29) is backwardly supported, e.g. via a ball bearing (26), on a support plate (27).

5. Device according to claim 4, **characterized in that** the support plate (27) for the plug housing (29) guided along a fastening flange (210) also serving as a mounting flange is supported on a retaining spring (212).

6. Device according to one of claims 1 to 5, **characterized in that** the plug housing (29) receiving the contact cap (28) comprising the contact pins (21, 22) is closed e.g. behind the feeding funnel (30) by means of a cover plate (23) in its resting position, the cover plate (23), preferably comprising through openings for the contact pins (21, 22) and being movable against the effect of a retaining. spring (211) from the front resting position while releasing the contact pins (21, 22) into a backward connecting position.

7. Device according to one of the preceding claims, **characterized in that** in its resting position the cover plate (23) is pressed against an inner shoulder (31) of the plug housing (29) by its retaining spring (211) at its outer edge, maybe with an intermediate sealing ring.

8. Device according to one of the preceding claims, **characterized in that** the sealing ring (24) is kept in the plug housing (29) at the front end of a distance sleeve (25).

9. Device according to one of the claims 5 to 8, **characterized in that** the retaining spring (211) surrounds the contact cap (28) for the cover plate (23) as a spring spiral.

10. Device according to one of the preceding claims, **characterized in that** the plug housing (29) comprises a stopper (216) receiving a valve core (215) in order to have condensed water trickled off, while penetration of water from the outside, however, is prevented.

## Revendications

1. Dispositif de connexion par fiches pour le raccordement électrique automatique, par exemple multipolaire, d'une remorque de véhicule, notamment d'un semi-remorque, à un véhicule tracteur, notamment à un tracteur routier, avec une boîte (D) et une fiche (S), lesquelles peuvent être disposées sur la remorque de véhicule, par exemple la fiche (S), ou sur le véhicule tracteur, par exemple la boîte (D), peuvent s'aligner entre elles lors de l'accouplement de la remorque de véhicule au véhicule tracteur et peuvent être déplacées relativement l'une vers l'autre entre une position de raccordement avancée et une position de repos en retrait au moyen d'un entraînement en forme de dispositif piston-cylindre, avec soit la fiche soit la boîte, de préférence un couvercle (5) de la boîte (D), pouvant être ouverte en déplaçant à l'aide de l'entraînement (10) en direction de la position de raccordement la pièce de contact (1) portant à l'intérieur les corps de contact (11, 12) et peut être refermée lors du retrait de la pièce de contact (1 ) en position de repos, **caractérisé en ce que** la fiche (S) est montée de sorte à pouvoir dévier de façon élastique latéralement contre l'effet d'un ressort de retenue (213).

2. Dispositif selon la revendication 1, **caractérisé en ce que** le ressort de retenue (213) pour la fiche (S) a la forme d'un ressort en spirale entourant le boîtier de la fiche (29), le diamètre dudit ressort en spirale se rétrécissant de préférence vers l'avant.

3. Dispositif selon la revendication 1 ou 2, **caractérisé en ce que** le boîtier de la fiche (29) est muni d'un entonnoir d'introduction (30) pour la boîte (D).

4. Dispositif selon l'une des revendications 1 à 3, **caractérisé en ce que** le boîtier de la fiche (29) prend appui par derrière sur une plaque support (27) par exemple au moyen d'un palier à billes (26).

5. Dispositif selon la revendication 4, **caractérisé en ce que** la plaque support (27) pour le boîtier (29) de la fiche, guidée sur une bride de fixation (210) servant par exemple également de bride de montage, prend appui contre un ressort de rappel (212).

6. Dispositif selon l'une des revendications 1 à 5, **caractérisé en ce que** le boîtier (29) recevant la couronne de contact (28) portant les fiches de contact.(21, 22) est fermé en position de repos par une plaque de recouvrement (23), par exemple derrière l'entonnoir d'introduction (30), laquelle plaque de recouvrement est munie de préférence d'ouvertures de passage pour les fiches de contact (21, 22) et peut être déplacée contre l'action d'un ressort de rappel (211) de la position de repos avancée dans une position de raccordement en retrait en libérant les fiches de contact (21, 22).

7. Dispositif selon l'une des revendications précédentes, **caractérisé en ce que** la plaque de recouvrement (23) en position de repos est appuyée par son ressort de rappel (211) au niveau de son bord extérieur contre un épaulement intérieur (31) du boîtier (29) de la fiche, éventuellement en interposant une bague d'étanchéité (24).

8. Dispositif selon l'une des revendications précédentes, **caractérisé en ce que** la bague d'étanchéité (24) est maintenue dans le boîtier (29) de la fiche à l'extrémité antérieure d'une douille d'écartement (25).

9. Dispositif selon l'une des revendications 5 à 8, **caractérisé en ce que** le ressort de rappel (211) pour la plaque de recouvrement (23) est un ressort en spirale qui entoure la couronne de contact (28).

10. Dispositif selon l'une des revendications précédentes, **caractérisé en ce que** le boîtier (29) de la fiche est muni d'un bouchon (216) recevant un corps de soupape (215) pour laisser goutter l'eau de condensation tout en empêchant la pénétration d'eau provenant de l'extérieur.
